# FASCICULE DE BREVET EUROPEEN

(11) **EP 1 228 679 B1**
(45) Date de publication et mention de la délivrance du brevet: **22.03.2006**
(21) Numéro de dépôt: 02290216.7
(22) Date de dépôt: 30.01.2002
(51) Int. Cl.: A01C 21/00

(54) **Procédé et dispositif pour la détermination d'une complémentation minérale pour un sol**
Verfahren und Vorrichtung zum Bestimmen eines mineralischen Zusatzes für den Boden
Method and device for determining a mineral soil supplement

(30) Priorité: 31.01.2001 FR 0101338
(43) Date de publication de la demande: 07.08.2002
(73) Titulaire: Société Anonyme des Procédés Roland Pigeon, 75015 Paris (FR)
(72) Inventeur: Rousselière, Guy, 75014 Paris (FR)
(74) Mandataire: Catherine, Alain

(56) Documents cités:
- WO-A-99/46703
- DE-A- 4 229 354
- US-A- 5 878 371

## Description

La présente invention concerne un procédé de détermination d'une complémentation minérale pour un sol destiné à une production végétale. Elle a des applications dans l'agriculture, de sorte que la production soit optimisée. L'invention concerne également un dispositif pour la mise en oeuvre du procédé.

Les conditions modernes de l'agriculture nécessitent la prise en compte de nombreux paramètres et, par exemple, des facteurs biologiques, environnementaux ou économiques, entre autres.

Le processus de prise de décision de l'agriculteur dans le choix de moyens mis en oeuvre pour optimiser la production de ses sols est donc potentiellement très complexe. La plupart du temps, l'agriculteur est contraint d'utiliser des règles plus ou moins empiriques et non systématisées pour se déterminer.

On a donc cherché des méthodes moins empiriques et c'est ainsi que l'on a proposé dans DE-4229354 l'utilisation d'outils informatiques pour le dosage d'engrais de plantes ou d'arbres en fonction de paramètres.

La présente invention propose, dans le cadre de la production végétale des sols où une complémentation minérale doit être apportée, un procédé ainsi qu'un dispositif de mise en oeuvre du procédé permettant d'optimiser la quantité de complément minéral qui doit être fournie au sol. Le dispositif permet également de connaître l'effet des choix de niveaux de paramètres de culture et/ou de milieu sur les besoins en complémentation et, par exemple, de déterminer sur quel paramètre il est plus particulièrement intéressant d'agir.

L'invention concerne un procédé de détermination d'une complémentation minérale, CM pour un sol destiné à une production végétale, procédé dans lequel:
(i) on sélectionne et évalue chacun des paramètres suivants:
   - amélioration souhaitée (AS),
   - qualité du sol (QS),
   - itinéraire technique (IT),
   - fractionnement de la complémentation minérale (FC),
(ii) on détermine une valeur d'indice en fonction du niveau des paramètres respectifs,
   la valeur d'indice I_{AS} correspondant à AS étant d'autant plus élevée que l'amélioration souhaitée est élevée;
   la valeur d'indice I_{QS} correspondant à QS étant d'autant plus élevée que la qualité du sol est mauvaise;
   la valeur d'indice I_{IT} correspondant à IT étant d'autant plus élevée que les conditions de production sont exigeantes;
   la valeur d'indice I_{FC} correspondant FC étant d'autant plus élevée que l'apport de la complémentation minérale est moins fractionné;
(iii) on additionne les différentes valeurs d'indice I_{AS}, I_{QS}, I_{IT}, I_{FC} correspondant aux paramètres pour produire un indice de complémentation IC, IC = I_{AS} + I_{QS} + I_{IT} + I_{FC} ;
(iv) et on détermine la complémentation minérale CM à partir de l'index de complémentation IC, CM étant d'autant plus élevé que IC est élevé.

Dans divers modes de réalisation de l'invention, les moyens suivants utilisés seuls ou selon toutes leurs combinaisons techniquement possibles peuvent être mis en oeuvre:
- la complémentation minérale, CM, est exprimée en poids par hectare par an,
- la complémentation minérale, CM, est exprimée en Kg/ha/an,
- chaque valeur d'indice I_{AS} , I_{QS} , I_{IT}, I_{FC} correspondant à un des paramètres AS, QS, IT, FC est déterminée en fonction des valeurs des autres paramètres,
- les valeurs d'indice I_{AS} , I_{QS} , I_{IT} , I_{FC} correspondant aux paramètres AS, QS, IT, FC sont déterminées indépendamment les unes des autres,
- AS est évalué en fonction de la rapidité de l'amélioration de la structure et de la vie du sol et/ou de la récolte,
- QS est évalué en fonction de la structure et du comportement du sol,
- IT est évalué en fonction des travaux et de la conduite des cultures,

Pour l'évaluation des valeurs d'indice des paramètres, une échelle à trois niveaux est utilisée, les trois niveaux correspondant à:
- pour l'amélioration souhaitée AS:
   - amélioration rapide sur le plan de la structure et de la vie du sol et/ou recherche de plus de qualité et d'amélioration de la valeur marchande ainsi que de la conservation des récoltes,
   - amélioration progressive sur le plan de la structure et de la vie du sol et/ou recherche de plus de qualité et de richesse des récoltes,
   - entretien sur le plan de la structure et de la vie du sol et/ou recherche de maintien de la qualité actuelle des récoltes,
- pour la qualité du sol QS:
   - sol très battant, très lourd, froid, hydromorphe en surface et/ou évolution très lente de la M.O. et/ou pas d'insectes ni de vers de terre et/ou présence de zones compactes et/ou forte tendance à la sécheresse et/ou prairie permanente: chargement > 1,5 UGB/ha,
   - sol souple, aéré, se réchauffant rapidement, gardant bien l'humidité sans hydromorphie et/ou bonne évolution de la M.O. et/ou présence d'insectes et de vers de terre, et/ou pas de zones compactes et/ou prairie permanente: chargement > 1 UGB/ha,
- pour l'itinéraire technique IT:
   - travaux du sol et/ou récoltes en conditions très humides ou dates obligées et/ou rotation avec majorité de cultures sarclées (betteraves, pommes de terre, légumes...) et/ou intensification forte (N et/ou pesticides) et/ou M.O. enfouie profondément et/ou irrigation fréquente et importante et/ou pluviométrie abondante,
   - travaux du sol et/ou récoltes en bonnes conditions et/ou rotation avec une majorité de plantes pérennes et/ou graminées et/ou intensification faible (N et/ou pesticides) et/ou apport de la M.O. en surface et/ou pas d'irrigation,
- et pour le fractionnement de la complémentation animale FC:
   - apports en une seule fois au printemps ou à l'automne et pas ou peu d'utilisation de l'EBV,
   - apport en deux fois dans l'année,
      - avant le démarrage de la végétation,
      - avant les transformations de la M.O.
      à l'automne et utilisation de l'EBV à chaque traitement pesticide,
   - apports du produit de complémentation minérale sol en trois ou quatre fois lors des périodes de végétations et utilisation de l'EBV à chaque traitement pesticide ou lors des stress de la plante.
Le sigle PRP protégé est ici utilisé pour désigner le produit de complémentation minérale ; M.O. signifie matière organique, N correspond à l'azote, UGB signifie unité gros bovins. Le terme EBV correspond à un complexe d'oligo-éléments sous forme liquide référencé sous la dénomination protégée EAU BLEUE Végétal de la société des PROCEDES ROLAND PIGEON.

L'invention concerne également un dispositif pour la mise en oeuvre du procédé précédent qui comporte un organe pour la détermination de l'indice de complémentation IC, et un abaque de détermination de la complémentation minérale, CM, à partir de l'indice de complémentation, IC.

Dans un premier mode de réalisation du dispositif, l'organe comporte une languette coulissant dans un étui, l'étui comportant au moins cinq fenêtres dont une première série de fenêtres de sélection et une fenêtre d'indice de complémentation IC, la languette comportant une série de chiffres et au moins un repère pour chacun des paramètres AS, QS, IT, FC, les repères, les chiffres et les fenêtres étant en relation de telle façon que lorsque les repères sont disposés en face des fenêtres de sélection choisies selon les niveaux des paramètres, le chiffre disposé en face de la fenêtre d'indice corresponde à IC.

Dans un second mode de réalisation du dispositif, l'organe comporte un étui et pour chacun des paramètres AS, QS, IT, FC, une languette coulissant dans l'étui, l'étui comportant pour chacun des paramètres au moins deux fenêtres dont au moins une fenêtre de sélection et une fenêtre de valeur, les languettes comportant au moins un repère et une série de chiffres, le repère, les chiffres et les fenêtres étant en relation de telle façon que, pour chaque paramètre, lorsque le repère est disposé en face de la fenêtre de sélection choisie en fonction du niveau du paramètre, le chiffre disposé en face de la fenêtre de valeur corresponde à la valeur d'indice dudit paramètre.

Le dispositif de l'invention peut encore comprendre les caractéristiques suivantes, considérées isolément ou selon toutes leurs combinaisons techniquement possibles pour l'un ou l'autre des modes de réalisation:
- la languette comporte au moins un repère imprimé pour chaque paramètre AS, QS, IT, FC, le repère étant une zone de contraste de taille approximativement égale à la fenêtre de sélection,
- la languette comporte au moins un repère imprimé pour chaque paramètre AS, QS, IT, FC, le repère étant une zone de contraste en dégradé de taille supérieure à la fenêtre de sélection et en ce qu'une gamme de chiffres correspondant à des valeurs d'indice soit en relation avec la zone de contraste,
- la languette comporte pour chaque paramètre AS, QS, IT, FC, au moins autant de repères que de niveaux du paramètre correspondant, les repères étant des descriptions des niveaux du paramètre,
- l'abaque de détermination de la complémentation minérale, CM, à partir de l'indice de complémentation, IC comporte un support et un disque mobile en rotation sur le support, le disque mobile comportant au moins une découpe en secteur circulaire, le support comportant pour chaque valeur possible de l'index de complémentation IC une valeur de complémentation minérale CM.

L'invention concerne également un dispositif pour la mise en oeuvre du procédé précédent qui comporte un moyen informatique pour la détermination de l'indice de complémentation, IC, et de la complémentation minérale CM, à partir de l'index de complémentation, IC.

En particulier le dispositif comporte un moyen informatique pour la détermination de l'indice de complémentation, IC, et de la complémentation minérale, CM, le moyen informatique permettant l'entrée des niveaux des paramètres, AS, QS, IT, FC, le calcul de chaque valeur d'indice indépendamment ou non des autres paramètres, l'éventuel affichage de chaque valeur d'indice et de IC et le calcul et l'affichage de la complémentation minérale CM.

La présente invention sera illustrée sans être aucunement limitée par des exemples de mise en oeuvre du procédé et du dispositif, en référence aux dessins annexés sur lesquels:
La Figure 1 illustre un organe du dispositif selon l'invention;
La Figure 2 représente un abaque;
La Figure 3 représente le support d'abaque;

Les Figures 4 à 7 représentent des languettes pour les indices.

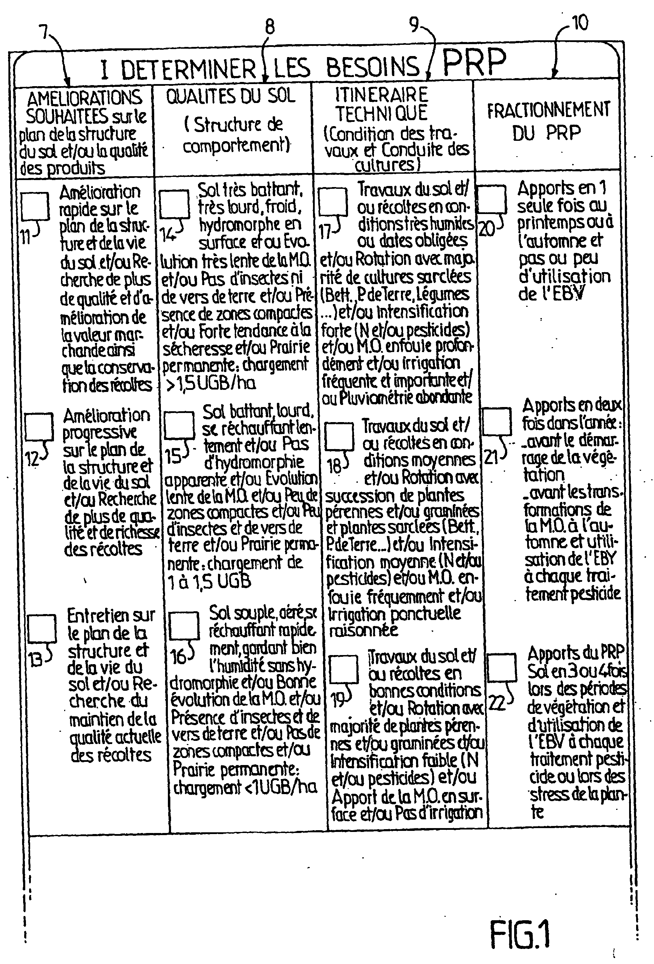

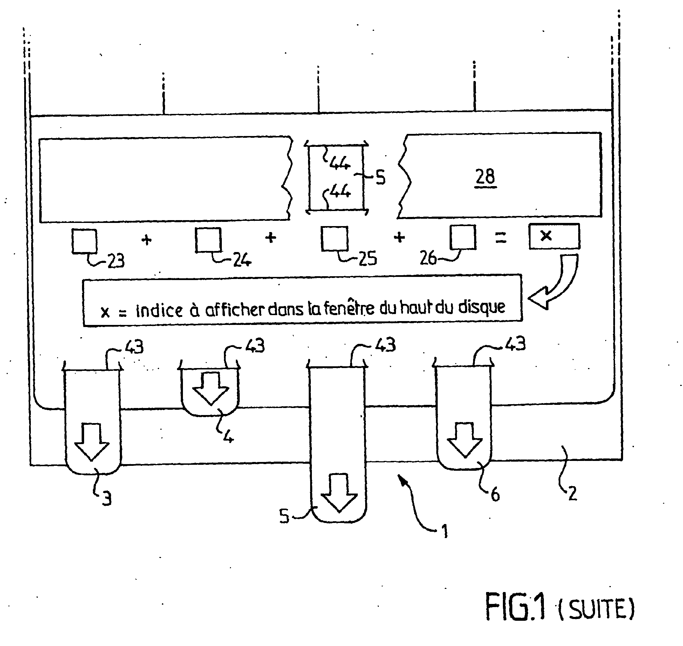

La Figure 1 représente un mode de réalisation particulier de l'organe 1 d'évaluation des paramètres. II comporte un étui 2 dans lequel coulissent quatre languettes 3, 4, 5, 6. Dans cet exemple, l'étui est réalisé par collage de deux feuilles en matière plastique semi-rigide. Les languettes 3, 4, 5, 6 sont maintenues solidairement en translation dans l'étui 2 par passage alternatif à travers des ouvertures 43 et 44 réalisées à travers un des feuillets de l'étui 2. Pour des raisons esthétiques, une bande de masquage 28 est disposée au niveau de la zone des ouvertures 44. Sur la Figure 1, la bande 28 a été représentée sectionnée en partie afin de visualiser le passage de la languette 5 à travers les ouvertures 44 du feuillet de l'étui 2. La bande 28 est de préférence réalisée dans le même matériau que celui de l'étui et est également fixée par collage. Dans d'autres formes de mise en oeuvre de l'invention, l'étui 2 peut être réalisé différemment et par exemple par pliage d'une feuille puis collage et/ou soudage et/ou agrafage. De même, les languettes peuvent être disposées de manière différente à travers le feuillet de l'étui 2 tout en étant solidaires en translation dudit étui.

Dans ce mode de mise en oeuvre de l'invention, les languettes sont indépendantes les unes des autres et à chaque languette correspond un paramètre. La languette 3 correspond au paramètre 7 AS d'améliorations souhaitées et est destinée à la détermination de l'indice I_{AS}. La languette 4 correspond au paramètre 8 QS de qualité du sol et est destinée à la détermination de l'indice I_{QS}. La languette 5 correspond au paramètre 9 IT d'itinéraire technique et est destinée à la détermination de l'indice I_{IT}. La languette 6 correspond au paramètre 10 FC de fractionnement de la complémentation et est destinée à la détermination de l'indice I_{FC}. Pour chacun de ces paramètres 7, 8, 9 et 10, une échelle à trois niveaux a été utilisée. A chacun des niveaux du paramètre correspond une fenêtre de sélection 11 à 22 de niveau de paramètre percée à travers un feuillet de l'étui 2.

Pour le paramètre 7 représentatif d'améliorations souhaitées :
- la fenêtre 11 correspond à une amélioration rapide sur le plan de la structure et de la vie du sol et/ou recherche de plus de qualité et d'amélioration de la valeur marchande ainsi que de la conservation des récoltes,
- la fenêtre 12 correspond à une amélioration progressive sur le plan de la structure et de la vie du sol et/ou recherche de plus de qualité et de richesse des récoltes,
- la fenêtre 13 correspond à l'entretien sur le plan de la structure et de la vie du sol et/ou recherche de maintien de la qualité actuelle des récoltes.

Pour le paramètre 8 de qualités du sol:
- la fenêtre 14 correspond à un sol très battant, très lourd, froid, hydromorphe en surface et/ou évolution très lente de la M.O. (matière organique) et/ou pas d'insectes ni de vers de terre et/ou présence de zones compactes et/ou forte tendance à la sécheresse et/ou prairie permanente: chargement > 1,5 UGB/ha,
- la fenêtre 15 correspond à un sol battant, lourd, se réchauffant lentement et/ou pas d'hydromorphie apparente et/ou évolution lente de la M.O. et/ou peu de zones compactes et/ou peu d'insectes et de vers de terre et/ou prairie permanente: chargement de 1 à 1,5 UGB,
- la fenêtre 16 correspond à un sol souple, aéré, se réchauffant rapidement, gardant bien l'humidité sans hydromorphie et/ou bonne évolution de la M.O. et/ou présence d'insectes et de vers de terre, et/ou pas de zones compactes et/ou prairie permanente: chargement > 1 UGB/ha.

Pour le paramètre 9 représentatif de l'itinéraire technique :
- la fenêtre 17 correspond aux travaux du sol et/ou récoltes en conditions très humides ou dates obligées et/ou rotation avec majorité de cultures sarclées (betteraves, pommes de terre, légumes ...) et/ou intensification forte (N ―azote- et/ou pesticides) et/ou M.O. enfouie profondément et/ou irrigation fréquente et importante et/ou pluviométrie abondante,
- la fenêtre 18 correspond travaux de sol et/ou récoltes en conditions moyenne et/ou rotation avec succession de plantes pérennes et/ou graminées et plantes sarclées (betteraves, pommes de terre) et/ou intensification moyenne (N et/ou pesticides) et/ou M.O. enfouie fréquemment et/ou irrigation ponctuelle raisonnée,
- la fenêtre 19 correspond aux travaux du sol et/ou récoltes en bonnes conditions et/ou rotation avec une majorité de plantes pérennes et/ou graminées et/ou intensification faible (N et/ou pesticides) et/ou apport de la M.O. en surface et/ou pas d'irrigation.

Pour le paramètre 10 représentatif du fractionnement de la complémentation :
- la fenêtre 20 correspond aux apports en une seule fois au printemps ou à l'automne et pas ou peu d'utilisation de l'EBV,
- la fenêtre 21 correspond à un apport en deux fois dans l'année: avant le démarrage de la végétation /avant les transformations de la M.O. / à l'automne et utilisation de l'EBV à chaque traitement pesticide,
- la fenêtre 22 correspond aux apports du produit de complémentation minérale sol en 3 ou 4 fois lors des périodes de végétations et utilisation de l'EBV à chaque traitement pesticide ou lors des stress de la plante.

Des fenêtres de valeur 23, 24, 25, 26, sont percées à travers un feuillet de l'étui 2 et permettent l'affichage des valeurs des indices correspondant à chacun des niveaux sélectionnés des paramètres. Dans ce mode de mise en oeuvre de l'invention, l'indice de complémentation, IC, est obtenu par l'addition des différentes valeurs d'indice correspondant à chacun des paramètres. De même, les valeurs affichées dans chacune des fenêtres de valeur 23, 24, 25, 26, sont indépendantes les unes des autres en ce sens que les quatre languettes 3, 4, 5, 6, sont indépendantes et peuvent être manoeuvrées indépendamment les unes des autres. Ce mode de mise en oeuvre permet de se rendre compte de l'impact de chaque paramètre sur les besoins en complémentation et permet ainsi, en plus de la détermination de la complémentation, de connaître le ou les paramètres sur lesquels il faut jouer pour diminuer les besoins.

Des instructions d'utilisation du dispositif sont de préférence imprimées sur le feuillet comportant les fenêtres de sélection et de valeur.

Dans une variante de réalisation non représentée d'un dispositif, l'index de complémentation, IC, est obtenu directement en fonction de la sélection des niveaux des paramètres 7 AS, 8 QS, 9 IT, 10 FC, par lecture d'un chiffre à travers une fenêtre d'index. A cette fin, une seule languette est disposée dans l'étui et est manoeuvrée. Dans ce dispositif, les différentes valeurs d'indice correspondant à chacun des paramètres et servant à calculer l'indice IC peuvent être, mais pas obligatoirement, liées entre elles. En d'autres termes, une valeur particulière d'un paramètre peut avoir une influence sur l'indice des autres paramètres contrairement au dispositif précédent de la Figure 1 où chacun des indices d'un paramètre est déterminé indépendamment des autres. Ainsi, seulement le résultat IC de l'addition des différents indices est affiché. Dans d'autres formes de mise en oeuvre, les différents indices de paramètre pourront aussi être affichés, comme sur la figure 1 à travers des fenêtres de valeur, en plus de leur somme IC, afin de visualiser les effets respectifs des paramètres. Un tel dispositif permet de déterminer un index de complémentation, IC, en tenant compte des dépendances éventuelles entre les paramètres. On prévoira en conséquence sur la languette toutes les combinaisons possibles des niveaux des paramètres ainsi que le résultat IC de la somme des valeurs d'indices des différents paramètres.

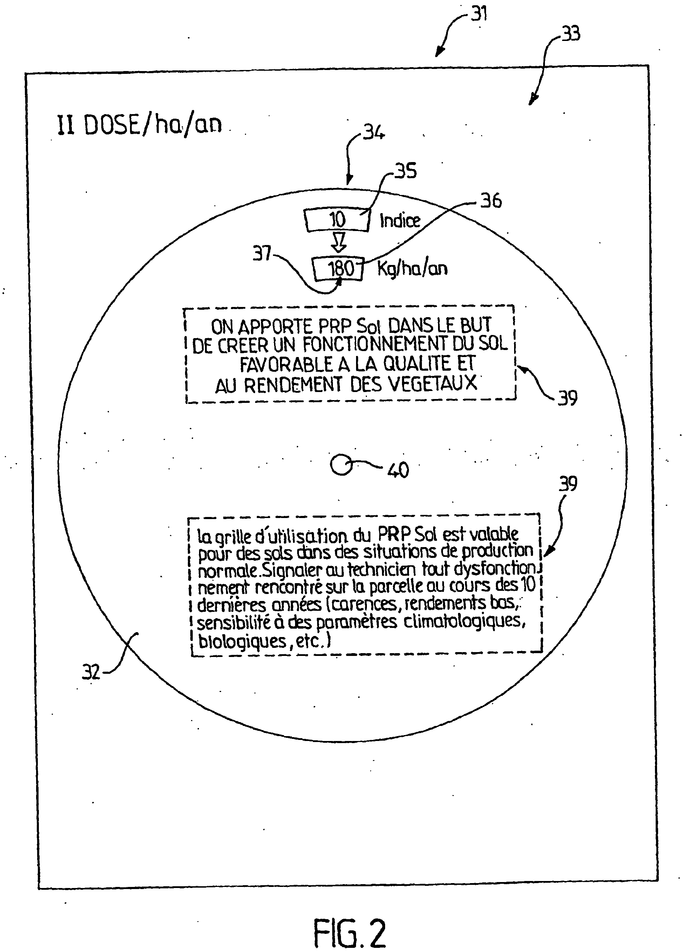

La Figure 2 représente un abaque 31 du type disque 32 mobile en rotation autour d'un centre 40 sur un support fixe 33. Le disque 32 est découpé pour former un secteur 34 ouvert par deux fenêtres, la première fenêtre 35 sélectionnant à une valeur d'indice de complémentation, IC, déterminée à l'étape précédente et à l'aide du dispositif de la Figure 1 et la seconde fenêtre 36 donnant la valeur de complémentation minérale 37 CM. L'abaque 31 permet ainsi déterminer la complémentation minérale, CM, en kg par hectare par an en fonction de l'indice de complémentation IC. Les valeurs correspondantes IC et CM sont imprimées sur le support fixe 33.

Des instructions et/ou informations complémentaires peuvent être imprimées sur le disque mobile 32, par exemple dans des zones d'informations 39.

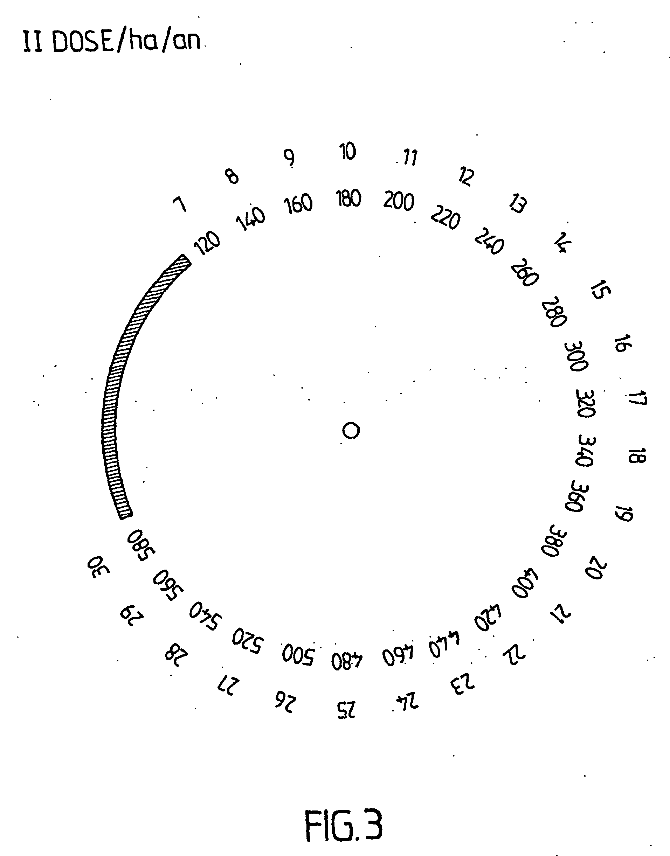

La Figure 3 qui visualise le support 33 de disque permet de connaître la correspondance entre IC et la complémentation minérale CM.

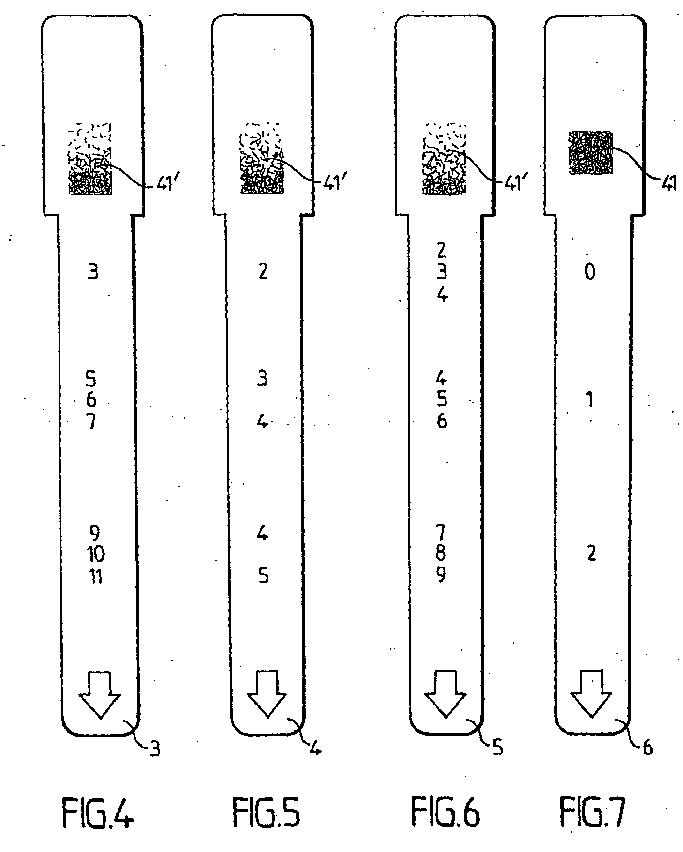

Les Figures 4 à 7 représentent les languettes du dispositif de la Figure 1. Dans ce mode de réalisation, chaque languette comporte un seul repère contrasté 41, 41' et une série de chiffres de valeurs d'indice correspondant aux différents niveaux des paramètres.

Sur la Figure 7, le repère contrasté 41 pour l'indice I_{FC} correspondant au paramètre fractionnement de complémentation FC est d'un contraste sensiblement uniforme et de taille sensiblement égale aux fenêtres dans lesquelles il est destiné à être affiché. La languette 6 comporte trois valeurs numériques d'indice pour correspondance avec trois fenêtres 20, 21, 22 de niveau de paramètre FC de fractionnement de complémentation.

Sur les Figures 4, 5 et 6, les repères contrastés 41' présentent un contraste en dégradé et une taille supérieure aux fenêtres dans lesquels ils doivent être affichés. Toutefois, cette taille est inférieure à l'écart vertical entre deux fenêtres adjacentes afin d'éviter que le même repère contrasté puisse apparaître dans deux fenêtres adjacentes. A chaque repère contrasté 41' avec dégradé, correspond de préférence une gamme de valeurs d'indice permettant ainsi une évaluation plus fine de la valeur d'indice pour un niveau de paramètre donné. Ainsi, Figure 4, pour le premier niveau de paramètres de AS, une seule valeur numérique est imprimée sur la languette 3 et pour les second et troisième niveaux de ce même paramètre, une gamme de valeurs avec trois chiffres est imprimée. Par contre, Figure 5, la gamme de valeurs pour le second niveau de paramètre QS ne comporte que deux chiffres sur la languette 4.

Les valeurs d'indice de complémentation IC donnés dans les exemples de mise en oeuvre sont approximatives et non limitatives. Elles résultent d'études réalisées sur des sols de divers types et destinés à des cultures ou de la prairie afin de déterminer quels sont les paramètres essentiels du milieu et de la conduite culturale ainsi que de leurs niveaux pertinents.

Dans la forme préférée de présentation, le dispositif à languette(s) et l'abaque forment la face interne d'une chemise formée de deux volets articulés entre eux, le dispositif à languette(s) et l'abaque étant rendu accessible à un utilisateur par ouverture de la chemise.

Dans d'autres formes de mise en oeuvre de l'invention, d'autres types de matériaux que du plastique et/ou combinaisons de matériaux peuvent être utilisés pour l'étui 2 et/ou les languettes 3, 4, 5, 6 et/ou l'abaque 32, 33. Ainsi du carton peut par exemple être utilisé. De même, le collage des différentes pièces à solidariser peut être remplacé par un soudage et/ou un agrafage ou tout autre type de moyen permettant de solidariser les pièces entre elles.

Enfin, le procédé de l'invention peut être mis en oeuvre dans un appareil informatique permettant l'entrée des niveaux des paramètres, le calcul de chaque indice de complémentation, indépendamment ou non des autres paramètres, l'éventuel affichage desdits indices, et le calcul et l'affichage de la complémentation CM.

## Revendications

1. Procédé de détermination d'une complémentation minérale, (CM), pour un sol destiné à une production végétale en fonction d'évaluations des paramètres, **caractérisé en ce que**:
(i) on sélectionne et évalue chacun des paramètres suivants:
• amélioration souhaitée (AS),
• qualité du sol (QS),
• itinéraire technique (IT),
• fractionnement de la complémentation minérale (FC),
(ii) on détermine une valeur d'indice en fonction du niveau des paramètres respectifs,
la valeur d'indice I_{As} correspondant à l'amélioration souhaitée (AS) étant d'autant plus élevée que l'amélioration souhaitée est élevée;
la valeur d'indice I_{QS} correspondant à la qualité du sol (QS) étant d'autant plus élevée que la qualité du sol est mauvaise;
la valeur d'indice I_{IT} correspondant à l'itinéraire technique (IT) étant d'autant plus élevée que les conditions de production sont exigeantes;
la valeur d'indice I_{FC} correspondant au fractionnement de la complémentation minérale (FC) étant d'autant plus élevée que l'apport de la complémentation minérale est moins fractionné;
(iii) on additionne les différentes valeurs d'indice I_{AS} , I_{QS}, I_{IT}, I_{FC} correspondant aux paramètres pour produire un indice de complémentation IC, IC = I_{AS} + I_{QS} + I_{IT} + I_{FC} ;
(iv) et on détermine la complémentation minérale (CM) à partir de l'index de complémentation IC, la complémentation minérale
étant d'autant plus élevée que l'index de complémentation IC est élevé.

2. Procédé selon la revendication 1, **caractérisée en ce que** les valeurs d'indice I_{AS}. I_{QS}, I_{IT}, I_{FC} correspondant aux paramètres d'amélioration souhaitée (AS), de qualité de sol (QS), d'itinéraire technique (IT), de fractionnement de la complémentation minérale (FC), sont déterminées indépendamment les unes des autres.

3. Procédé selon la revendication 1 ou 2, **caractérisé en ce que** l'amélioration souhaitée (AS) est évaluée en fonction de la rapidité de l'amélioration de la structure et de la vie du sol et/ou de la récolte.

4. Procédé selon l'une quelconque des revendications précédentes, **caractérisé en ce que** la qualité du sol (QS) est évaluée en fonction de la structure et du comportement du sol.

5. Procédé selon l'une quelconque des revendications précédentes, **caractérisé en ce que** l'itinéraire technique (IT) est évalué en fonction des travaux et de la conduite des cultures.

6. Dispositif pour la mise en oeuvre du procédé selon la revendication 1 **caractérisé en ce qu'**il comporte un organe de détermination de l'indice de complémentation, IC, et un abaque (31) détermination de la complémentation minérale (CM) à partir de l'indice de complémentation, IC, ledit organe comportant une languette coulissant dans un étui, ledit étui comportant au moins cinq fenêtres dont une première série de fenêtres de sélection de niveau de paramètre et une fenêtre d'indice de complémentation IC, la languette comportant une série de chiffres de valeurs d'indice de complémentation et au moins un repère de niveau de paramètre pour chacun des paramètres d'amélioration souhaitée (AS), de qualité de sol (QS), d'itinéraire technique (IT), de fractionnement de la complémentation minérale (FC), les repères, les chiffres et les fenêtres étant en relation de telle façon que lorsque les repères sont disposés en face des fenêtres de sélection choisies selon les niveaux des paramètres, le chiffre disposé en face de la fenêtre d'indice corresponde à l'indice de complémentation IC.

7. Dispositif pour la mise en oeuvre du procédé selon l'une quelconque des revendications 1 à 5, **caractérisé en ce qu'**il comporte un organe (1) de détermination de l'indice de complémentation, IC, et un abaque (31) de détermination de la complémentation minérale (CM), à partir de l'indice de complémentation, IC, ledit organe comportant un étui (2) et pour chacun des paramètres d'amélioration souhaitée (AS), de qualité de sol (QS), d'itinéraire technique (IT), de fractionnement de la complémentation minérale (FC), une languette (3, 4, 5, 6) coulissant dans l'étui (2), ledit étui comportant pour chacun des paramètres (7) (8) (9) (10) au moins deux fenêtres dont au moins une fenêtre de sélection (11, 12, 13) (14, 15, 16) (17, 18, 19) (20, 21, 22) et une fenêtre de valeur (23) (24) (25) (26), lesdites languettes comportant au moins un repère (41, 42) et une série de chiffres, ledit repère, lesdits chiffres et lesdites fenêtres étant en relation de telle façon que, pour chaque paramètre, lorsque le repère est disposé en face de la fenêtre de sélection choisie selon le niveau du paramètre, le chiffre disposé en face de la fenêtre de valeur corresponde à la valeur d'indice I_{AS}, I_{QS} , I_{IT}, I_{FC} , dudit paramètre.

8. Dispositif selon l'une quelconque des revendications 6 ou 7 **caractérisé en ce que** l'abaque (31) de détermination de la complémentation minérale, (CM), à partir de l'indice de complémentation IC, comporte un support (33) et un disque (32) mobile en rotation sur le support, le disque mobile comportant au moins une découpe (35, 36) en secteur (34) circulaire, le support comportant pour chaque valeur possible de l'index de complémentation IC une valeur de complémentation minérale (CM).

9. Appareil informatique pour la mise en oeuvre du procédé selon la revendication 1, **caractérisé en ce qu'**il comporte des moyens pour la détermination de l'indice de complémentation, IC, et de la complémentation minérale (CM), lesdits moyens permettant l'entrée des niveaux des paramètres, d'amélioration souhaitée (AS), de qualité de sol (QS), d'itinéraire technique (IT), de fractionnement de la complémentation minérale (FC), le calcul de chaque valeur d'indice indépendamment ou non des autres paramètres, l'éventuel affichage de chaque valeur d'indice I_{AS} , I_{QS} , I_{IT}, I_{FC} et de IC = I_{AS} + I_{QS} + I_{IT} + I_{FC} et le calcul et l'affichage de la complémentation minérale (CM).

## Patentansprüche

1. Verfahren zur Bestimmung einer Mineralergänzung (CM) für einen Boden, der zum Pflanzenanbau bestimmt ist, in Abhängigkeit von der Auswertung von Parametern, **dadurch gekennzeichnet, dass** :
(i) jeder der nachfolgend aufgeführten Parameter ausgewählt und ausgewertet wird :
• gewünschte Verbesserung (AS),
• Qualität des Bodens (QS),
• technischer Weg (IT)
• Aufteilung der Mineralergänzung (FC),
(ii) ein Richtwert in Abhängigkeit von dem jeweiligen Parameterniveau festgelegt wird,
wobei der Richtwert I_{AS}, der der gewünschten Verbesserung (AS) entspricht, umso höher ist, je höher die gewünschte Verbesserung ist ; und wobei der Richtwert I_{QS}, der der Qualität des Bodens (QS) entspricht, umso höher ist, je schlechter die Qualität des Boden ist;
und wobei der Richtwert I_{IT}, der dem technischen Weg (IT) entspricht, umso höher ist, je höher die Anforderungen an die Produktionsbedingungen sind ;
und wobei der Richtwert I_{FC}, der der Aufteilung der Mineralergänzung (FC) entspricht, umso höher ist, je weniger die Zufuhr der Mineralergänzung aufgeteilt bzw. fraktioniert ist ;
(iii) die verschiedenen Richtwerte I_{AS}, I_{QS}, I_{IT}, I_{FC}, die den Parametern entsprechen, addiert werden, so dass man einen Ergänzungs-Index IC, IC = I_{AS}, I_{QS}, I_{IT}, I_{FC} erhält ;
(iv) die Mineralergänzung (CM) ausgehend von dem Ergänzungs-Index IC bestimmt wird, wobei die Mineralergänzung umso höher ist, je höher der Ergänzungs-Index IC ist.

2. Verfahren nach Anspruch 1, **dadurch gekennzeichnet, dass** die Richtwerte I_{AS}, I_{QS}, I_{IT}, I_{FC}, die den Parametern für die gewünschte Verbesserung (AS), die Qualität des Bodens (QS), den technischen Weg (IT), die Aufteilung der Mineralergänzung (FC) entsprechen, unabhängig voneinander festgelegt werden.

3. Verfahren nach Anspruch 1 oder 2, **dadurch gekennzeichnet, dass** die gewünschte Verbesserung (AS) auf der Grundlage beurteilt wird, wie schnell sich die Struktur und die Lebensdauer des Bodens und/oder die Ernte verbessern.

4. Verfahren nach einem der vorhergehenden Ansprüche, **dadurch gekennzeichnet, dass** die Qualität des Bodens (QS) in Abhängigkeit von der Struktur und von dem Verhalten des Bodens beurteilt wird.

5. Verfahren nach einem der vorhergehenden Ansprüche, **dadurch gekennzeichnet, dass** der technische Weg (IT) in Abhängigkeit von den Arbeiten und dem Verhalten der Kulturen bzw. der angebauten Frucht beurteilt wird.

6. Vorrichtung für die Durchführung des Verfahrens gemäß Anspruch 1, **dadurch gekennzeichnet, dass** sie eine Einrichtung für die Bestimmung des Ergänzungs-Index IC, und ein Nomogramm (31) zur Bestimmung der Mineralergänzung (CM), ausgehend von dem Ergänzungs-Index IC, besitzt, wobei die Einrichtung eine in einem Halter verschiebbare Zunge besitzt, und dieser Halter mindestens fünf Fenster hat, von denen eine erste Reihe Auswahl-Fenster für das Parameterniveau bestimmt ist, sowie ein Fenster für den Ergänzungs-Index IC, und wobei die Zunge eine Reihe von Ziffern mit Richtwerten für die Ergänzung und mindestens eine Marke für das Parameterniveau für jeden Parameter der gewünschten Verbesserung (AS), der Qualität des Bodens (QS), des technischen Weges (IT), der Aufteilung der Mineralergänzung (FC) besitzt, wobei die Marken, die Ziffern und die Fenster derart in Beziehung zueinander stehen, dass bei Anordnung der Marken gegenüber den Auswahlfenstern, die gemäß den Parameterniveaus ausgewählt wurden, die Ziffer, die gegenüber dem Index-Fenster angeordnet ist, dem Ergänzungs-Index IC entspricht.

7. Vorrichtung für die Durchführung des Verfahrens nach einem der Ansprüche 1 bis 5, **dadurch gekennzeichnet, dass** sie eine Einrichtung (1) für die Bestimmung des Ergänzungs-Index IC und ein Nomogramm (31) zur Bestimmung der Mineralergänzung (CM), ausgehend von dem Ergänzungs-Index, besitzt, wobei die Einrichtung einen Halter (2) und für jeden der Parameter der gewünschten Verbesserung (AS), der Qualität des Bodens (QS), des technischen Weges (IT), der Aufteilung der Mineralergänzung (FC) eine Zunge (3, 4, 5, 6) besitzt, die in dem Halter (2) verschiebbar ist, wobei der Halter für jeden der Parameter (7) (8) (9) (10) mindestens zwei Fenster aufweist, von denen mindestens eines ein Auswahlfenster (11, 12, 13) (14, 15, 16) (17, 18, 19) (20, 21, 22) und eines ein Wert-Fenster (23) (24) (25) (26) ist, wobei die Zungen mindestens eine Marke (41, 42) und eine Zahlenreihe aufweisen, und die Marke, die Ziffern und die Fenster derart in Beziehung zueinander stehen, dass bei Anordnung der Marke gegenüber dem Auswahlfenster, das gemäß dem Parameterniveau ausgewählt wurde, die Ziffer, die gegenüber dem Wert-Fenster angeordnet ist, dem Richtwert I_{AS}, I_{QS}, I_{IT}, I_{FC} des Parameters entspricht.

8. Vorrichtung nach einem der vorhergehenden Ansprüche 6 oder 7, **dadurch gekennzeichnet, dass** das Nomogramm (31) zur Bestimmung der Mineralergänzung (CM), ausgehend von dem Ergänzungs-Index IC, einen Träger (33) und eine bewegliche Scheibe (32) besitzt, die sich auf dem Träger dreht, wobei die bewegliche Scheibe in dem Kreis (34) mindestens einen Ausschnitt (35, 36) besitzt, und der Träger für jeden möglichen Wert des Ergänzungs-Index IC einen Mineralergänzungswert (CM) besitzt.

9. Informatikanlage für die Durchführung des Verfahrens nach Anspruch 1, **dadurch gekennzeichnet, dass** sie Einrichtungen zur Bestimmung des Ergänzungs-Index IC und der Mineralergänzung (CM) besitzt, wobei die Einrichtungen die Eingabe der Parameterniveaus der gewünschten Verbesserung (AS), der Qualität des Bodens (QS), des technischen Weges (IT), der Aufteilung der Mineralergänzung (FC), die Berechnung eines jeden Richtwertes unabhängig oder abhängig von den anderen Parametern, die eventuelle Anzeige jedes Richtwertes I_{AS}, I_{QS}, I_{IT}, I_{FC} und von IC = I_{AS}, I_{QS}, I_{IT}, I_{FC} sowie die Berechnung und Anzeige der Mineralergänzung (CM) erlauben.

## Claims

1. A method for determining a mineral complementation, (CM), for a soil intended for vegetal production relative to estimated parameters,
**characterised in that**:
(i) each of the following parameters is selected and estimated:
• desired improvement (DI),
• soil quality (SQ),
• technical path (TP),
• fractioning of mineral complementation (FC),
(ii) an index value is determined relative to the level of the respective parameters,
the index value I_{DI} corresponding to the desired improvement (DI) being all the higher that the desired improvement is high;
the index value I_{SQ} corresponding to the soil quality (SQ) being all the higher that the soil quality is poor;
the index value I_{TP} corresponding to the technical path (TP) being all the higher that the production conditions are demanding;
the index value I_{Fc} corresponding to the fractioning of mineral complementation (FC) being all the higher that the added mineral complementation is less fractioned;
(iii) the different index values are added I_{DI}, I_{SQ}, I_{TP}, I_{FC} corresponding to the parameters to produce a complementation index IC, IC =I_{DI} + I_{SQ} + I_{TP} + I_{FC};
(iv) and the mineral complementation (MC) is determined from the complementation index IC, the mineral complementation being all the higher that the complementation index IC is high.

2. A method according to claim 1, **characterised in that** the index values I_{DI}, I_{SQ}, I_{TP}, I_{FC} corresponding to the parameters of desired improvement (DI), of soil quality (QS), of technical path (TP), of fractioning of mineral complementation (FC), are determined independently from one another.

3. A method according to claim 1 or 2, **characterised in that** the desired improvement (DI) is estimated relative to the quick improvement in the structure and the life of the soil and/of the harvest.

4. A method according to any of the previous claims, **characterised in that** the soil quality (SQ) is estimated relative to the structure and the behaviour of the soil.

5. A method according to any of the previous claims, **characterised in that** the technical path (TP) is estimated relative to the works and the managements of the growing fields.

6. A device for implementing a method according to claim 1 **characterised in that** it includes a member for determining the complementation index, Cl, and abacus (31) for determining the mineral complementation (MC) from the complementation index, Cl, said member comprising a tongue sliding in a sheath, said sheath comprising at least five windows whereof a first series of parameter level selection windows and a complementation index Cl window the tongue comprising a series of complementation index value numerals and at least one parameter level reference for each of the parameters of desired improvement (DI), of soil quality (QS), of technical path (TP), of fractioning of mineral complementation (FC), the references, the numerals and the windows being in such a relationship that when the references are arranged opposite selection windows chosen according to parameter levels, the numeral arranged opposite the index window corresponds to the complementation index Cl.

7. A device for implementing a method according to any of the claims 1 to 5, **characterised in that** it includes a member (1) for determining the complementation index, Cl, and an abacus (31) for determining the mineral complementation (MC), from the complementation index, Cl, said member comprising a sheath (2) and for each of the parameters of desired improvement (DI), of soil quality (QS), of technical path (TP), of fractioning of mineral complementation (FC), a tongue (3, 4, 5, 6) sliding into the sheath (2), said sheath comprising for each of the parameters (7) (8) (9) (10) at least two windows whereof at least one selection window (11, 12, 13) (14, 15, 16) (17, 18, 19) (20, 21, 22) and one value window (23) (24) (25) (26), said tongues comprising at least one reference (41, 42) and a series of numerals, said reference, said numerals and said windows being in such a relationship that, for each parameter, when the reference is arranged opposite the selection window chosen according to the level of the parameter, the numeral arranged opposite the value window corresponds to the index value I_{DI}, I_{SQ}, I_{TP}, I_{FC} of said parameter.

8. A device according to any of the claims 6 or 7 **characterised in that** the abacus (31) for determining the mineral complementation, (MC), from the complementation index Cl, includes a bracket (33) and a disk (32) rotatably mobile on the bracket, the mobile disk comprising at least one cut-out (35, 36) in a circular sector (34), the bracket comprising for each possible value of the complementation index Cl a mineral complementation (MC) value.

9. A data-processing apparatus for implementing the method according to claim 1, **characterised in that** it includes means for determining the complementation index, CI and the mineral complementation (MC), said means enabling to input levels of the parameters, of desired improvement (DI), of soil quality (QS), of technical path (TP), of fractioning of mineral complementation (FC), the calculation of each index value independently or not from the other parameters, the possible display of each index value to, I_{SQ}, I_{TP}, I_{FC} and of Cl = I_{DI} + I_{SQ} + I_{TP} + I_{FC} and the calculation and the display of the mineral complementation (MC).
